# EUROPEAN PATENT APPLICATION

(11) **EP 1 406 457 A1**
(43) Date of publication of application: **07.04.2004**
(21) Application number: 02405856.2
(22) Date of filing: 03.10.2002
(51) Int. Cl.: H04Q 3/62, H04Q 7/22

(54) **Method for handling messages in a private branch exchange and a private branch exchange**

(71) Applicant: Ascom AG, 3000 Bern 14 (CH)
(72) Inventor: Hiller, Frank, 4500 Solothurn (CH)
(74) Representative: Rutz, Peter

(57) **Abstract**

The inventive method allows handling of text messages in a private branch exchange (PBX) that comprises a message handling system (MHS), which receives and forwards text messages originating or terminating in internal fixed or cordless terminals (T1, ..., Tn; IP-T1, ..., IP-Tn; PP1, ..., PPn) that are attached to the private branch exchange and that act as message entities. According to the present invention the message handling system receives and stores the text messages in a volatile memory of a first storage device (VM); delivers the text messages in a suitable format to an addressed internal message entity according to messaging parameters retrieved from a numbering plan that covers at least the internal message entities (T1, ..., Tn; IP-T1, ..., IP-Tn; PP1, ..., PPn), and if the delivery of the message is acknowledged by the addressed message entity, the message is deleted by the message handling system (MHS), or if the delivery of the message is not acknowledged by the addressed message entity, the message is transferred to a non-volatile memory of a second storage device (NVM), and a timer object is created that is used to deliver the message according to specific parameters with at least one further delivery attempt. In a preferred embodiment the message handling system (MHS) comprises functionalities of a Short Message Service Center SMSC.

## Description

The present invention generally relates to a method for handling messages in a private branch exchange and to a private branch exchange, according to claim 1 and 9.

The present invention specifically relates to a private branch exchange that handles messages that originate or terminate in fixed or cordless terminals that are attached to the private branch exchange and that are arranged in groups which operate according to different standards such as cordless telephony standards as described in [1], Jerry D. Gibson, THE COMMUNICATIONS HANDBOOK, CRC PRESS LLC, Boca Raton 1997, page 1077; Voice over IP standards as described in [2], Sean Christensen, Voice over IP solutions, Part Number 200011-002 06-01, Juniper Networks, Sunnyvale 2001 or ISDN standards as described in [3], Peter Bocker, ISDN-Digitale Netze für Sprach-, Text-, Daten-, Video- und Multimediakommunikation, 4. Auflage, Springer Verlag, Berlin 1997, pages 13-33.

The present invention further relates to a private branch exchange that handles messages that originate or terminate in a mobile telecommunications network; for example as specified in ANSI IS-41 IS-54 IS-95 standards or ETSI GSM UMTS 3GPP standards (see [1], chapter 77, pages 1075-1076).

### BACKGROUND OF THE INVENTION

According to [3], page 29 and pages 195-197, the Integrated Services Digital Network (ISDN) provides Mail- or Messaging services that are used to forward voice, text- or video information to a subscriber's mail box. Mail boxes assigned to the subscribers were normally realised with memory devices that were centralised in the Integrated Services Digital Network, usually in a private branch exchange as described in [3], pages 195 - 197 or [1], pages 440-449.

Implementations of messaging services, i.e. realisation of message handling systems in private branch exchanges were traditionally based on the related ITU-T recommendations (e.g. ITU-T F.400 series).

Message handling systems and services, as described in said recommendations enable users to exchange messages on a store-and-forward basis. A message submitted by one user, the originator, is conveyed by the message transfer system, the principal component of a larger message handling system, and subsequently delivered to one or more additional users, the message's recipients.

A message handling system comprises a variety of interconnected functional entities. Message transfer agents cooperate to perform the store-and-forward message transfer function. Message stores provide storage for messages and enable their submission, retrieval and management. User agents help users access the message handling system. Access units provide links to other communication systems and services of various kinds (e.g. telematic services, postal services).

Depending on the architectures of the currently existing private branch exchanges, vendors developed proprietary message handling systems.

A proprietary message handling system for a private branch exchange is described for example in [4], WO 00/48413. This system allows sending messages from data network terminals to terminals that are connected to the private branch exchange. According to this system messages are assembled by a network agent, embedded into a LAN interface card, and sent to a call manager, that resides on the main call processor board of the private branch exchange and that processes and stores the message information separately for each destination. Subsequently the receipt of the message is acknowledged by the call manager to the originating subscriber and signalled to the receiving subscriber, who will be required to send a request signal to the call manager in order to retrieve the message from the storage device and display the message on the display of the terminal. After the message has been transferred it will be deleted in the storage device.

Developing such a proprietary system for a private branch exchange involves considerable efforts. Adding features and services to such a system requires further efforts.

In view of the limited resources and numerous further tasks the main processor of the private branch exchange has to fulfil, the described message handling system, in particular the storage management processes, add a considerable burden to the system.

Further, retrieving a message from a centralised storage device, upon receipt of an optical or acoustical signal, may not be desirable for subscribers and operators.

Traditionally in systems with a private branch exchange, communication terminals remain continuously attached so that messages were despatched without controlling the actual delivery. However, nowadays private branch exchanges are providing expanded services and allow connection of fixed, wireless, cordless and IP terminals. Further, the importance of messaging, in particular text messaging, has significantly increased, so that presently available private branch exchanges do not fulfil all of the subscriber's expectations.

Performing messaging with persistently storing messages and guaranteed delivery is known from [5], GSM Specification 03.40 concerning the technical realisation of the Short Message Service (SMS) in a mobile telecommunications network PLMN. However in a mobile telecommunications network PLMN the message handling system, i.e. the concerned Short Message Service Center SMSC stores all received messages persistently, since mobile stations are often not attached to the mobile telecommunications network PLMN. The validity period, a service element of the Short Message Service (SMS), indicates how long a Short Message shall be stored in the Short Message Service Center SMSC before it shall be deleted if the addressed mobile station will not be accessible. In order to execute the numerous storage processes the Short Message Service Center SMSC requires considerable resources. However, compared to a private branch exchange that, besides message handling, fulfils numerous other tasks, a Short Message Service Center SMSC (see [6], U.S. Patent No. 6,263,212 B1) is exclusively dedicated to the handling of Short Messages.

The present invention is therefore based on the object of specifying an improved method for handling messages in a private branch exchange and to a private branch exchange operating according to this method.

More specifically, it is an object of the present invention to provide a private branch exchange with a message handling system that handles messages that originate or terminate in fixed or cordless terminals that are attached to the private branch exchange and that may operate according to different standards such as cordless telephony standards, Voice over IP standards or ISDN standards.

It is a further object of the present invention to provide a private branch exchange with a message handling system that handles messages that originate or terminate in a mobile telecommunications network.

Still further, it is an object of the present invention to provide a private branch exchange with a message handling system that requires a reduced amount of system resources when handling messages.

Still further, it is an object of the present invention to provide a private branch exchange with a message handling system that provides a high level of functionalities and is capable to use the features of the private branch exchange.

It is another object of the present invention to provide a private branch exchange with a message handling system that can be built, maintained and enhanced with reduced efforts.

### SUMMARY OF THE INVENTION

The above and other objects of the present invention are achieved by a method and a private branch exchange according to claim 1 and claim 9.

The inventive method allows handling of text messages in a private branch exchange that comprises a message handling system, which receives and forwards text messages originating or terminating in internal fixed or cordless terminals that are attached to the private branch exchange and that act as message entities.

According to the present invention the message handling system
a) receives and stores the text messages in a volatile memory of a first storage device,
b) delivers the text messages in a suitable format to an addressed internal message entity according to messaging parameters, e.g. parameters relating to service elements or options selected by the sender receiver or system operator, that are retrieved from a numbering plan that covers at least the internal message entities, and
c1) if the delivery of the message is acknowledged by the addressed message entity, the message is deleted by the message handling system, or
c2) if the delivery of the message is not acknowledged by the addressed message entity, the message is transferred to a non-volatile memory of a second storage device, and a timer object is created that is used to deliver the message according to specific parameters with at least one further delivery attempt.

The implementation of the inventive message handling system in a private branch exchange yields several advantages.

First of all, messaging in an inventive private branch exchange is properly managed since the message flow is controlled in such a way that messages, which do not reach their destination, are persistently stored until they can be delivered with a further attempt or until their validity period has expired.

In order to reduce the workload on the processing system of an inventive private branch exchange the message handling system primarily acts in a first stage as a "receive and forward system" and not as a "receive - store and forward system" as a classical message handling system implemented in a private branch exchange or a Short Message Service Center SMSC of a mobile telecommunications network PLMN.

Received text messages remain in or are transferred to a volatile memory of a first storage device such as the systems random access memory RAM (see [7], Andrew S. Tanenbaum, Modern Operating Systems, 2^{nd} edition, Prentice Hall, New Jersey 2001, pages 23 - 28). Time consuming storage procedures are therefore avoided, before the first attempt to deliver said text messages is executed. Further, with the first delivery attempt, a high percentage of the received text messages can be delivered, so that, after successful delivery, the time consuming procedures for persistently storing the text message in a flash memory or on a disk, as well as control procedures for further delivery attempts can be avoided.

Only for text messages that could not be delivered additional storage and control procedures are implemented, so that over all, on the one hand a minimal burden for the processing system and on the other hand confirmed delivery of the text messages results.

Further, text messages are delivered in a suitable format to an addressed internal terminal and therein embedded messaging clients, i.e. to an internal message entity, which means that text messages are adapted according to specifications applied to the receiving internal message entity and according to messaging parameters that are provided by the sender, the receiver or the operator of the private branch exchange. Service elements, parameters or options of the Short Messaging System SMS are described in [5], chapter 3, pages 13-22. If the originating and the terminating internal message entity use the same specifications, then an adaptation of the text message may not be required.

In the present application the term text messages is therefore used for messages that contain text in protocol data units according to any protocol specification that may be used by a terminal that exchanges messages with the message handling system of an inventive private branch exchange.

The most important case is the message format of Short Messages as defined in [5], chapter 9 (see also [8], WAVECOM, An introduction to the SMS in PDU mode; GSM Recommendation phase 2, Version 1.00, January 2000). However, as already stated, an inventive private branch exchange can handle Short Messages, but also messages with another format.

In a preferred embodiment the inventive private branch exchange is equipped with a message handling system that connects to internal and/or external message entities by means of a message interface as specified in one of the Short Message interface specifications that are listed in [9], Interface Protocols for the Connection of Short Message, Service Centers (SMSCs) to Short Message Entities (SMEs), ETSI Technical Report ETSI TR 123 039 V5.0.0 (June 2002):
a) Short Message Peer to Peer (SMPP) Interface Specification;
b) Short Message Service Centre external machine interface;
c) SMSC to SME Interface Specification;
d) SMSC Open Interface Specification; or
e) SMSC Computer Access Service And Protocol Manual.

The core of the message handling system MHS and its boundaries are therefore realised in conformance with de-facto standards. Hence, the message handling system MHS implemented in the private branch exchange achieves a high level of performance resulting from the use of de-facto standards. Proprietary solutions with corresponding costs, in particular for maintenance, updates and further developments are therefore significantly reduced. In addition, since a high percentage or all of the external text messages received form external terminals are in the Short Message format (see [8]), adaptation processes can be simplified or completely avoided.

Since, unlike mobile stations of a mobile telecommunications network PLMN, most of the internal terminals are continuously attached to the private branch exchange, transactions described by the implemented Interface Protocols are adapted accordingly. In particular, bind and unbind procedures are not utilised since the internal message entities are continuously bound by the message handling system.

The message handling system provides in a preferred embodiment therefore services of a Short Message Service Center SMSC, that operates according to the standards of a mobile telecommunications network PLMN, and thus, as indicated in [5], chapter 62, page 25,
a) controls the message flow,
b) interprets the contents of received text messages according to choices made by the originator, and
c) performs time management for the handled text messages.

The resulting message handling system of the inventive private branch exchange acts therefore as a Short Message Service Center SMSC that may utilise the features of the private branch exchange. The message handling system may however allow for each internal message entity only one or more outstanding messages, for which an acknowledgment has not been received at a given time.

The message handling system of the inventive private branch exchange in preferred embodiments uses
a) a TCP/IP based communication line provided by the message interface in order to exchange text messages with a message handling system of a related private branch exchange (PBX1), and/or
b) a TCP/IP based communication line provided by the message interface in order to exchange Short Messages with an external Short Message Service Center SMSC, and/or
c) a connection to the to the signalling system of the mobile telecommunications network PLMN in order to directly exchange Short Messages with Short Message Entities SME and mobile stations attached to the mobile telecommunications network PLMN.

In the first case, an internal network, e.g. a Private Integrated Services Network PISN, may comprise two or more private branch exchanges that are interconnected by means of a TCP/IP based communication line so that text messages can internally be handled, thus avoiding costs for external message transfer as well as adding additional workload on external message handling systems such as Short Message Service Centers SMSC. In a preferred embodiment, the numbering plan of every private branch exchange covers all internal terminals that are attached to the first or a further private branch exchange.

In the second case, the inventive private branch exchange may use a TCP/IP based communication line in order to exchange Short Messages with a Short Message Service Center SMSC that connects to a Mobile Services Switching Center MSC of a mobile telecommunications network PLMN.

In the third case the message handling system of the inventive private branch exchange connects to a Mobile Services Switching Center MSC in order to directly exchange messages with terminals, e.g. mobile stations, served by the mobile telecommunications network PLMN. The subscribers, which use internal terminals or have an agreement with the operator of the inventive private branch exchange, can therefore use mobile stations or further Short Message Entities SME that are registered at the message handling system of the inventive private branch exchange. A large enterprise may therefore find an agreement with the operator of the mobile telecommunications network PLMN in order to directly access a Mobile Services Switching Center MSC, thus controlling all costs for text messaging with a single contract. The operator of the mobile telecommunications network PLMN however does not need to provide additional resources for the subscribers covered under that contract. Besides the control of costs, the enterprise further controls the message traffic allowing standardised messages for all employees. Connection of a Short Message Service Center SMSC to a Mobile Services Switching Center MSC is known from [10], Digital cellular telecommunications system; Example protocol stacks for interconnecting Service Centre(s) (SC) and Mobile-services Switching Centre(s) (MSC) (GSM 03.47 version 5.0.0) ETSI TECHNICAL REPORT, ETR 354, November 1996.

The numbering plan of the inventive private branch exchange is used as a register, listing; besides identification number, calling number, terminal type, etc.; user selected values or default values of messaging parameters for all terminals and subscribers. Transferring the functionalities of a Short Message Service Center SMSC into the inventive private branch exchange allows therefore an optimised message handling, since features of a Short Message Service Center SMSC can be implemented while simultaneously utilising the individual features of the inventive private branch exchange.

Hence, with an inventive private branch exchange, fewer resources are used for the internal and external handling of messages. Internally, a higher number of text messages can be processed with reduced delays and enhanced functionalities. Externally, fewer resources are required, since functionalities of a Short Message Service Center SMSC are incorporated in a preferred embodiment of the private branch exchange.

Further, text message can be adapted to all terminals attached to the private branch exchange. Text messages with a higher security level, e.g. text messages for emergency personnel, can be handled differently form other text messages and are preferably persistently stored when received in the private branch exchange. In case of a power failure, security relevant text messages can therefore be delivered after system recovery.

### BRIEF DESCRIPTION OF THE DRAWINGS

Some of the objects and advantages of the present invention have been stated, others will appear when the following description is considered together with the accompanying drawings, in which:
- Figure 1: shows a telecommunications network with a known private branch exchange PBX0 that comprises a message handling system MHSO designed to handle text messages that originate or terminate in a terminal X-T1 attached to a Public Switched Telephone Network PSTN/ISDN, in a terminal X-T1 attached to the mobile telecommunications network PLMN or in an internal terminal PP, T1, ...Tn, IP-T1, IP-T2 that is attached to the private branch exchange PBX0,
- Figure 2: shows the telecommunications network of figure 1 with an inventive private branch exchange PBX,
- Figure 3: shows the inventive private branch exchange PBX connected to a Mobile Services Switching Center MSC of the mobile telecommunications network PLMN, to a Short Message Service Center SMSC and to a further inventive private branch exchange PBX1.

### DETAILED DESCRIPTION OF THE PREFERRED EMBODIMENTS

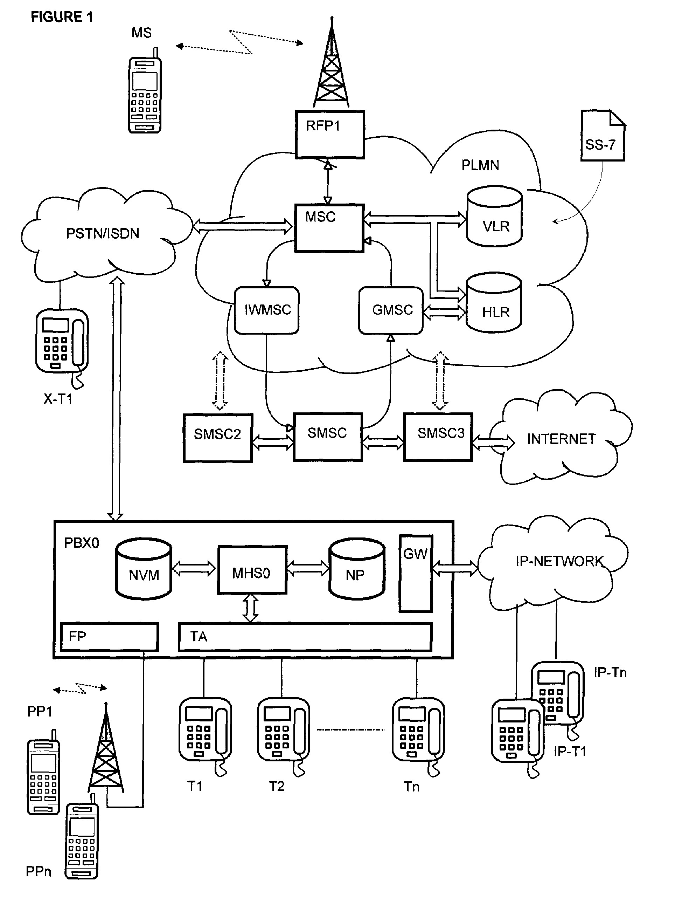

Figure 1 shows a telecommunications network with a known private branch exchange PBX0 that comprises a message handling system MHSO designed to handle text messages that originate or terminate in a terminal X-T1 attached to a Public Switched Telephone Network PSTN/ISDN, in a terminal MS attached to the mobile telecommunications network PLMN or in an internal terminal PP, T1, ...Tn, IP-T1, IP-T2 that is attached to the private branch exchange PBX0.

As described in [1], pages 440-449, private branch exchanges, which are normally installed in the customer premises (see [1], page 440-447, figure 33.5) e.g. of an enterprise, comprise a standardised network interface that allows connection to a central office of the Public Switched Telephone Network PSTN/ISDN.

According to [12], U.S. Patent No. 5,825,868, a primary differentiator of private telecommunications systems (such as those that are commonly implemented and owned by large businesses for their internal use) from public telecommunications systems (the telephone companies' systems) is their feature-richness. The private branch exchanges installed in private telecommunications systems typically provide many features that are commonly not provided in the public network. Such features include a plethora of forwarding features, transfer features, conferencing features, intercom dialling features, hunt features, call-treatment codes, hot line service, etc..

As shown in [12], figure 1, a private network of an enterprise may comprise more than one private branch exchange.

The private branch exchange PBX0 shown in figure 1 comprises terminal adapters TA or subscriber line modules adapted to interact with fixed terminals T1, ..., Tn, and a fixed part FP of a cordless communication system, to which portable terminals PP1, ..., PPn can be attached (see [11], B. Walke, Mobilfunknetze und ihre Protokolle, Band 2, B.G. Teubner Verlag, Stuttgart 2000, page 120, figure 5.12). The private branch exchange PBX0 is further equipped with a gateway GW that connects the private branch exchange PBX0 to a Voice over IP network, to which IP-telephones IP-T1, ..., IP-Tn are attached (see [2], page 13).

As described in [12], private branch exchanges comprise a numbering plan NP, in which all terminals that are attached or attachable to the private branch exchange(s) are registered. Besides terminal address and identification, the numbering plan may comprise further terminal and subscriber specific data that are required for example to utilise the private branch exchange's features according to the requirements and rights of the served subscribers.

The private branch exchange PBX0 shown in figure 1 incorporates a storage device NP, which in non-volatile memory contains the numbering plan as well as configuration data of the private branch exchange PBX0. The control unit and the switching unit of the private branch exchange PBX0 are shown and described in [3], pages 211-213, and figure 6.10.

The known private branch exchange PBX0 further incorporates a proprietary message handling system MHSO that allows subscribers to exchange messages on a store-and-forward basis (see [3], page 29). As described above, messages handled by the message handling system MHS are stored in a non-volatile memory of a storage device NVM before they are delivered to the addressed subscribers. This, as described above, causes a considerable burden on the main processing system of the private branch exchange PBX0 so that additional resources will be required. The storage devices NP and NVM, which are drawn as separate units, may of course be realised as a single unit.

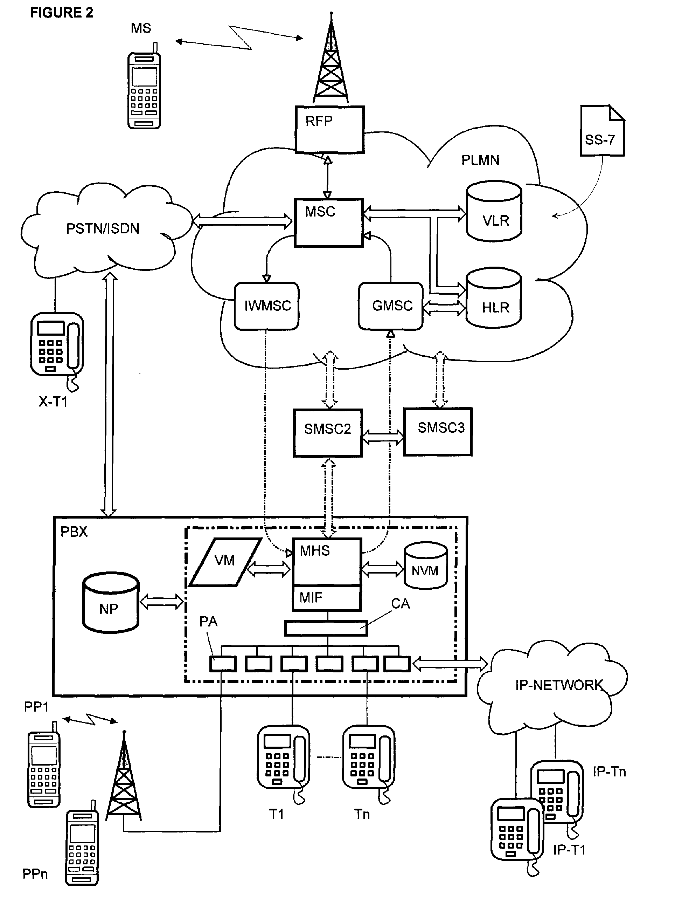

Figure 2 shows the telecommunications network of figure 1 with an inventive private branch exchange PBX incorporating a message handling system MHS that contains volatile and non-volatile memory in a first and a second storage device VM and NVM (see [7], pages 23 - 28) . As shown in [7], page 24, figure 1-7, access time between different memory types vary significantly (between a hard disc and a register by a factor of up to 10⁷). Processes for storing and retrieving data in or from the first and second storage device VM, NVM or from the numbering plan as well as processes for assembling, disassembling or interpreting messages are performed by a control unit or corresponding processing system MHSP.

The message handling system MHS receives and forwards text messages originating or terminating in external and/or internal fixed or cordless terminals T1, ..., Tn; IP-T1, ..., IP-Tn; PP1, ..., PPn that are attached to the private branch exchange and that act as message entities.

According to the present invention, the message handling system
a) receives and stores text messages in the volatile memory of the first storage device VM,
b) delivers the text messages in a suitable format to a message entity of an addressed internal terminal T1, ..., Tn; IP-T1, ..., IP-Tn; PP1, ..., PPn according to messaging parameters retrieved from the numbering plan, and
c1) if the delivery of the message is acknowledged by the addressed internal terminal T1, ..., Tn; IP-T1, ..., IP-Tn; PP1, ..., PPn, the message is deleted by the message handling system, or
c2) if the delivery of the message is not acknowledged by the addressed internal terminal T1, ..., Tn; IP-T1, ..., IP-Tn; PP1, ..., PPn, the message is transferred to the non-volatile memory of the second storage device; then a timer object is created that is used to deliver the message according to specific parameters with at least one further delivery attempt.

According to the present invention, time consuming storage procedures are therefore avoided, before the first attempt to deliver said text messages is executed. Further, with the first delivery attempt, a high percentage of the received text messages can be delivered, so that, after successful delivery, the time consuming procedures for persistently storing and deleting the text message in a flash memory or on a disk, as well as control procedures for further delivery attempts can be avoided (see the different access times for the different memory groups in [7], page 24, figure 1-7; approximate access times is for a hard disk about 10 ms, for flash memory about 50-100 ns, for main memory RAM about 10 ns and for cache and registers about 1-2 ns).

A data set for a non-despatched text message that is stored in the volatile memory of the first storage device VM typically contains besides text, the addresses of the sender and receiver, the selected or default retransmission time, the selected or default validity period, a flag indicating the request for a confirmation and possibly further parameters.

The retransmission time determines the time interval of retransmissions of the text message after delivery attempts have failed. If all automatic attempts fail, the sender will be informed if a confirmation had been requested. After the validity period expires a non-delivered message will be deleted from the second storage device NVM.

A data set stored in the non-volatile memory of the second storage device NVM for a text message, which could not be delivered with the first attempt, typically contains besides the text, the addresses of the sender and receiver, the selected or default retransmission time, the selected or default validity period, a flag indicating the request for a confirmation a message, and an identification used to retrieve the text message for future retransmission.

After the text message has been stored in the second storage device NVM, the corresponding data set is deleted in the first storage device VM.

A timer object, that has been created after the first delivery attempt has failed, preferably contains the selected or default retransmission time and the selected or default validity period, the identification used to retrieve the text message for future retransmission and possibly further message parameters.

The format of the messages and the stored parameters will be selected according to the given requirements, the system configuration and features implemented in the private branch exchange PBX. If a private network with more than one private branch exchange PBX, PBX1 is implemented, the address of the destination private branch exchange PBX, PBX1 is preferably added.

In order to avoid a proprietary realisation, the message handling system MHS is realised in a preferred embodiment based on available standards of the Short Message Service that is specified in [5].

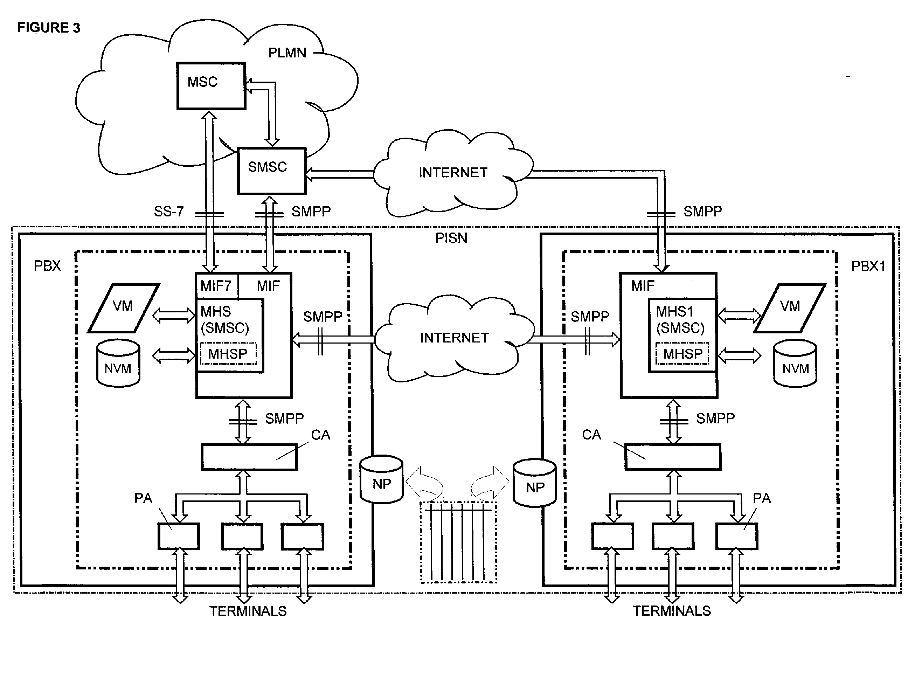

As shown in figure 3 the message handling system MHS of the inventive private branch exchange PBX communicates with internal and external message entities over a message interface MIF that operates according to a de-facto standard as listed in [9] :
a) Short Message Peer to Peer (SMPP) Interface Specification;
b) Short Message Service Centre external machine interface;
c) SMSC to SME Interface Specification;
d) SMSC Open Interface Specification; or
e) SMSC Computer Access Service And Protocol Manual.

Since, unlike mobile stations of a mobile telecommunications network PLMN, most of the internal terminals are continuously attached to the private branch exchange, transactions described by the implemented Interface Protocols are adapted accordingly. In particular, bind and unbind procedures are not utilised since the internal message entities are continuously bound by the message handling system.

The message handling system provides in a preferred embodiment therefore services of a Short Message Service Center SMSC, that operates according to the standards of a mobile telecommunications network PLMN, and thus, as indicated in [5], chapter 62, page 25, at least
a) controls the message flow in order to allow for each internal message entity only one outstanding message, for which an acknowledgment has not been received at a given time,
b) interprets the contents of received text messages according to choices made by the originator, and
c) performs time management for the handled text messages.

Fundamental procedures regarding the transfer of a mobile terminated Short Message from a Short Message Service Center SMSC to a mobile station MS are described in [5], chapter 10.1, pages 61 to 71, regarding the connection of a Short Message Service Center SMSC to a Mobile Services Switching Center MSC see also [5], Annex A.

The Short Message is forwarded by the Short Message Service Center SMSC to a gateway function GMSC which formally is a function of a Mobile Services Switching Center MSC. The gateway GMSC is capable of interrogating a Home Location Register HLR which contains routing information to the visited Visitor Location Register VLR. The Visitor Location Register VLR is the functional unit that attends to a mobile station MS operating outside the area of the Home Location Register HLR. A visiting mobile station MS is automatically registered at the nearest Mobile Services Switching Center MSC and the Visitor Location Register VLR is informed accordingly. Based on the retrieved routing information the gateway GMSC forwards the Short Message to the visited Mobile Services Switching Center MSC. The visited Mobile Services Switching Center MSC retrieves corresponding subscriber information from the Visitor Location Register VLR based on which the Short Message is forwarded to the mobile station MS. Operations are terminated by returning a delivery report to the Short Message Service Center SMSC of the network where the Short Message has been initiated.

Fundamental procedures regarding the transfer of a mobile originated Short Message within a GSM system from a mobile station MS to a Short Message Service Center SMSC are described in [5], chapter 10.2, pages 71 to 81.

Before a Short Message is transferred the Mobile Services Switching Center MSC retrieves information from the Visitor Location Register VLR in order to verify that the requested service is available to the subscriber. Afterwards the Short Message is transferred via the Mobile Services Switching Center MSC to an interworking function IWMSC formally belonging to a Mobile Services Switching Center MSC. The interworking function IWMSC is capable of receiving a Short Message from within the mobile telecommunications network PLMN and submitting it to a Short Message Service Center SMSC which will forward the Short Message to the addressed subscriber as described above. The Short Message Service Center SMSC will always be addressed by means of an E.164 address.

In addition the message handling system MHS may perform modifications of the message according to the features implemented in the inventive private branch exchange PBX. The message handling system may interpret the message and look for subscriber specific data and then perform actions accordingly.

A subscriber may use forwarding features, transfer features, or distribution features. A manager may copy messages to the secretary or to the members of a project team. Further, based on a code contained in the text, the message handling system MHS may route a message that has been sent to a main number of the enterprise to a specific department.

The inventive private branch exchange PBX comprises therefore a message handling system MHS that is based on standards or de-facto standards without loosing the functionalities and features of the private branch exchange PBX.

As shown in figure 3, the inventive private branch exchange PBX comprises adaptors PA; CA that are used to adapt the text messages according to the specifications of the internal terminals T1, ..., Tn; IP-T1, ..., IP-Tn; PP1, ..., PPn that are attached to the private branch exchange PBX. The core of the message handling system MHS is therefore standardised while adaptations are performed in its boundaries. Adapters PA that served obsolete terminals can therefore be replaced without modifications of the core of the message handling system MHS that is hidden behind the message interface MIF.

In a preferred embodiment a centralised adapter CA is provided that provides common functionalities for decentralised adapters PA. For example, text messages that are addressed to different groups of internal terminals T1, ..., Tn; IP-T1, ..., IP-Tn; PP1, ..., PPn may be distributed by the centralised adapter CA.

In the preferred embodiment shown in figure 3, the message handling system MHS of the inventive private branch exchange PBX allows the exchange of messages between internal terminals T1, ..., Tn; IP-T1, ..., IP-Tn; PP1, ..., PPn and external terminals MS, X-T1, that are attached to related private branch exchanges PBX1 or different external networks PLMN, PSTN/ISDN, Internet.

The message handling system MHS of the inventive private branch exchange PBX uses
a) a TCP/IP based communication line provided by the message interface MIF in order to exchange text messages with a message handling system MHS of a related private branch exchange PBX1, and/or
b) a TCP/IP based communication line provided by the message interface MIF in order to exchange Short Messages with an external Short Message Service Center SMSC, and/or
c) a connection to the signalling system of the mobile telecommunications network PLMN in order to directly exchange Short Messages with Short Message Entities SME and mobile stations MS attached to the mobile telecommunications network PLMN.

The Private Integrated Services Network PISN shown in figure 3 comprises a first and a second private branch exchange PBX, PBX1 that are connected through a TCP/IP based communication line. Both private branch exchanges PBX, PBX1 use numbering plans in local databases NP, in which preferably all terminals of the Private Integrated Services Network PISN are registered (symbolically shown in figure 3). A text message may therefore be transferred from one to the other private branch exchange PBX; PBX1 without using the Public Switched Telephone Network PSTN/ISTN. The text message is preferably stored in the volatile memory of the originating private branch exchange PBX. However if a higher security level is required the originating private branch exchange PBX may store the message instead in the non-volatile memory. If the originating private branch exchange PBX stores the data of the called subscriber in the local numbering plan NP, then the message may already be adapted before it is forwarded; however adaptation is preferably performed in the terminating private branch exchange PBX1.

Further, Short Messages may be exchanged with terminals MS attached to the mobile telecommunications network PLMN through an external Short Message Service Center SMSC. In this case, the inventive private branch exchange PBX uses a TCP/IP based communication line in order to connect to the Short Message Service Center SMSC, which connects to a Mobile Services Switching Center MSC of the mobile telecommunications network PLMN.

The first private branch exchange PBX of the Private Integrated Services Network PISN further comprises a signalling interface MIF7 that connects to the signalling system, the Signalling System No. 7, of the mobile telecommunications network PLMN. In this case the message handling system MHS of the inventive private branch exchange PBX is directly connected to a Mobile Services Switching Center MSC of the mobile telecommunications network PLMN and can therefore directly exchange messages with terminals, e.g. mobile stations MS, attached to the mobile telecommunications network PLMN. The subscribers registered in the Private Integrated Services Network PISN can therefore use mobile stations MS that use the message handling system MHS of the inventive private branch exchange PBX as a Short Message Service Center SMSC (currently each mobile station MS is assigned to a single Short Message Service Center SMSC).

Since the second private branch exchange PBX1 of the Private Integrated Services Network PISN does not comprise a signalling interface MIF7, all Short Messages are routed through the first private branch exchange PBX.

A large enterprise, e.g. with thousands and more employees, may therefore use an inventive private branch exchange PBX that directly connects to the mobile telecommunications network PLMN. Subscribers of the Private Integrated Services Network PISN need therefore no contract with an external service provider. Besides the control of costs, the enterprise further controls the message traffic allowing standardised messages for all employees. Connection of a Short Message Service Center SMSC to a Mobile Services Switching Center MSC is known from [10], Digital cellular telecommunications system; Example protocol stacks for interconnecting Service Centre(s) (SC) and Mobile-services Switching Centre(s) (MSC) (GSM 03.47 version 5.0.0) ETSI TECHNICAL REPORT, ETR 354, November 1996.

What has been described above is merely illustrative of the application of the principles of the present invention. Other arrangements can be implemented by those skilled in the art without departing from the spirit and scope of protection of the present invention. In particular, a man skilled in the art would perform the required adaptations in order to integrate the inventive message handling system MHS in presently available private branch exchanges PBX0.

### REFERENCES

[1] Jerry D. Gibson, THE COMMUNICATIONS HANDBOOK, CRC PRESS, Boca Raton 1997
[2] Sean Christensen, Voice over IP solutions, Part Number 200011-002 06-01, Juniper Networks, Sunnyvale 2001
[3], Peter Bocker, ISDN-Digitale Netze für Sprach-, Text-, Daten-, Video- und Multimediakommunikation, 4. Auflage, Springer Verlag, Berlin 1997
[4] International Publication WO 00/48413
[5] GSM Specification 03.40 concerning the technical realisation of the Short Message Service (SMS), ETSI European Telecommunication Standard ETS 300 536, Version 4 (October 1996)
[6] U.S. Patent No. 6,263,212 B1
[7] Andrew S. Tanenbaum, Modern Operating Systems, 2^{nd} edition, Prentice Hall, New Jersey 2001
[8] WAVECOM, An introduction to the SMS in PDU mode; GSM Recommendation phase 2, Version 1.00, January 2000
[9] Interface Protocols for the Connection of Short Message, Service Centers (SMSCs) to Short Message Entities (SMEs), ETSI Technical Report ETSI TR 123 039 V5.0.0 (June 2002)
[10] Digital cellular telecommunications system; Example protocol stacks for interconnecting Service Centre(s) (SC) and Mobile-services Switching Centre(s) (MSC) (GSM 03.47 version 5.0.0) ETSI TECHNICAL REPORT, ETR 354, November 1996
[11] B. Walke, Mobilfunknetze und ihre Protokolle, Band 2, B.G. Teubner Verlag, Stuttgart 2000
[12] U.S. Patent No. 5,825,868

## Claims

1. A method for handling text messages in a private branch exchange (PBX) comprising a message handling system (MHS), that receives and forwards text messages originating or terminating in internal fixed or cordless terminals (T1, ..., Tn; IP-T1, ..., IP-Tn; PP1, ..., PPn) that are attached to the private branch exchange (PBX) and that act as message entities, **characterised in that** the message handling system (MHS)
a) receives and stores the text messages in a volatile memory of a first storage device (VM),
b) delivers the text messages in a suitable format to an addressed internal message entity according to messaging parameters retrieved from a numbering plan that covers at least the internal message entities (T1, ... , Tn; IP-T1, ..., IP-Tn; PP1, ..., PPn) , and
c1) if the delivery of the message is acknowledged by the addressed message entity, the message is deleted by the message handling system (MHS), or
c2) if the delivery of the message is not acknowledged by the addressed message entity, the message is transferred to a non-volatile memory of a second storage device (NVM), and a timer object is created that is used to deliver the message according to specific parameters with at least one further delivery attempt.

2. A method for handling messages according to claim 1, wherein, before the first delivery attempt, data of a received text message remains in the initially used locations or is transferred to further locations of the volatile memory of a first storage device (VM).

3. A method for handling messages in a private branch exchange (PBX) comprising a message handling system (MHS), that receives and forwards text messages originating or terminating in internal fixed or cordless terminals (T1, ..., Tn; IP-T1, ..., IP-Tn; PP1, ..., PPn) that are attached to the private branch exchange (PBX) and that act as message entities, in particular according to claim 1, **characterised in that** the message handling system (MHS) connects to internal and/or external message entities by means of a message interface (MIF) as specified in one of the following short message interface specifications
a) Short Message Peer to Peer (SMPP) Interface Specification;
b) Short Message Service Centre external machine interface;
c) SMSC to SME Interface Specification;
d) SMSC Open Interface Specification; or
e) SMSC Computer Access Service And Protocol Manual.

4. Method according to claim 3, wherein internal message entities are continuously bound by the message handling system (MHS) so commands used to bind and unbind receivers and transmitters are not used.

5. Method according to claim 1, 2, 3 or 4, wherein the message handling system (MHS) provides services of a Short Message Service Center SMSC, that operates according to the standards of a mobile telecommunications network (PLMN), and thus at least
a) controls the message flow,
b) interprets the contents of received text messages according to choices made by the originator, and
c) performs time management for the handled text messages.

6. Method according to one of the claims 1 to 5, wherein the message handling system (MHS) uses
a) a TCP/IP based communication line provided by the message interface (MIF) in order to exchange text messages with a message handling system (MHS1) of a related private branch exchange (PBX1), and/or
b) a TCP/IP based communication line provided by the message interface in order to exchange Short Messages with an external Short Message Service Center (SMSC), and/or
c) a connection to the signalling system of the mobile telecommunications network (PLMN) in order to directly exchange Short Messages with Short Message Entities and mobile stations (MS) attached to the mobile telecommunications network (PLMN).

7. Method according to one of the claims 1 to 6, wherein text messages sent to the internal short message entities and corresponding signalling transactions are individually adapted according to the specifications used by the internal terminals (T1, ..., Tn; IP-T1, ..., IP-Tn; PP1, ..., PPn) .

8. Method according to claim 7, wherein the adaptation of text messages sent to the internal short message entities and signalling transactions is performed in two stages, in a centralised adapter (CA) designed to perform distribution services and subsequently in one of a group of decentralised adapters (PA) designed to perform individual adaptation services for assigned terminals (T1, ..., Tn; IP-Tl, ..., IP-Tn; PP1, ..., PPn) .

9. Private branch exchange (PBX) with a message handling system (MHS) that operates according to a method as defined in claim 1, comprising
a) a first storage device (VM) with volatile memory that is used to store received text messages,
b) means (CTRL) designed to retrieve messaging parameters from the private branch exchange's (PBX) numbering plan and to perform transactions used to deliver the text messages to an addressed internal message entity and to receive a corresponding reply,
c) adapters (CA; PA) designed to adapt the messages and signalling transactions according to the specifications of the message entities of the addressed internal terminals (T1, ..., Tn; IP-T1, ..., IP-Tn; PP1, ..., PPn) ,
d) a second storage device (NVM) with non-volatile memory that is used to store text messages that could not be delivered with the first attempt, and
e) means (CTRL), designed to create timer objects that are used to deliver text messages stored in the second storage device according to specific parameters with at least one further delivery attempt.

10. Private branch exchange (PBX) with a message handling system (MHS) that operates according to a method as defined in claim 3, **characterised in that** the message handling system (MHS) connects to message entities of internal and/or external terminals (T1, ..., Tn; IP-T1, ..., IP-Tn; PP1, ..., PPn; MS, X-T1) by means of a message interface (MIF) as specified in one of the following short message interface specifications
a) Short Message Peer to Peer (SMPP) Interface Specification;
b) Short Message Service Centre external machine interface;
c) SMSC to SME Interface Specification;
d) SMSC Open Interface Specification; or
e) SMSC Computer Access Service And Protocol Manual.

11. Private branch exchange (PBX) according to claim 9 or 10, **wherein** the message handling system (MHS) provides services of a Short Message Service Center SMSC, that operates according to the standards of a Mobile telecommunications network (PLMN), and thus at least
a) controls the message flow,
b) interprets the contents of received text messages according to choices made by the originator, and
c) performs time management for the handled text messages.

12. Private branch exchange (PBX) according to claim 9, 10 or 11, **wherein** the message handling system (MHS) is designed to use
a) a TCP/IP based communication line provided by the message interface in order to exchange text messages with a message handling system (MHS) of a related private branch exchange (PBX1), and/or
b) a TCP/IP based communication line provided by the message interface in order to exchange Short Messages with an external Short Message Service Center (SMSC), and/or
c) a connection to the signalling system of the mobile telecommunications network (PLMN) in order to directly exchange Short Messages with short message entities and mobile stations (MS) attached to the mobile telecommunications network (PLMN).

13. Private branch exchange (PBX) according to one of the claims 9 to 12, **wherein** each group of internal terminals (T1, ..., Tn; IP-T1, ..., IP-Tn; PP1, ..., PPn) is connected to a decentralised terminal adaptor, that is designed to adapt text messages forwarded by the message handling system (MHS) and corresponding signalling transactions according to the specifications used by the internal terminals (T1, ..., Tn; IP-T1, ..., IP-Tn; PP1, ..., PPn) and therein embedded messaging entities.

14. Private branch exchange (PBX) according to claim 13, **wherein** a centralised terminal adapter (CA) is provided that connects the message handling system (MHS) to the decentralised adaptors (PA).
